# EUROPEAN PATENT APPLICATION

(11) **EP 4 752 380 A1**
(43) Date of publication of application: **03.06.2026**
(21) Application number: 24845642.8
(22) Date of filing: 24.07.2024
(51) Int. Cl.: F15D 1/12, F01D 25/00, F02C 7/24, F02C 7/045

(54) **SOUND ABSORBING PANEL WITH RIBLET**

(30) Priority: 27.07.2023 JP 2023122640
(71) Applicant: IHI Corporation, Tokyo 135-8710 (JP)
(72) Inventor: KAGAYA, Ryo, Tokyo 135-8710 (JP); KUSUDA, Shinya, Tokyo 135-8710 (JP); MUROOKA, Takeshi, Tokyo 135-8710 (JP)
(74) Representative: MERH-IP Matias Erny Reichl Hoffmann Patentanwälte PartG mbB
(86) International application number: PCT/JP2024/026402
(87) International publication number: WO 2025/023267

(57) **Abstract**

A sound absorption panel with riblets is used by being attached at a position facing an air flow passage. It comprises a perforated plate provided with riblets and through holes and facing the air flow passage, and cells having internal spaces that communicate with the air flow passage through the through holes. The riblets are provided on the surface of the perforated plate facing the air flow passage, and are not provided on the back surface of the perforated plate or on the inner surfaces of the through holes.

## Description

### TECHNICAL FIELD

The present disclosure relates to a sound absorption panel with riblets.

### BACKGROUND ART

Patent Literature 1 discloses a sound absorption panel for turbine engines. The sound absorption panel includes a support layer having a set of divided cavities with open surfaces, an exterior sheet coupled to cover and close the open surfaces, perforations, and at least a subset of the perforations having inlets oriented axially with respect to the axial flow passage. The perforations are located within an opposing sheet and are in fluid communication with corresponding ones of the cavities to form a set of acoustic resonators.

### CITATION LIST

### PATENT LITERATURE

Patent Literature 1: U.S. Patent No. 10961913

### SUMMARY OF THE INVENTION

### TECHNICAL PROBLEM

According to the technology described in Patent Literature 1, air resistance and friction losses occurring at and behind perforations are reduced by non-circular perforations along the axial direction. However, there is a problem that reduction of friction losses across the entire surface of the perforated plate facing the air flow passage and noise absorption cannot be achieved simultaneously.

The present disclosure has been made in view of the above problem. Its objective is to provide a sound absorption panel with riblets capable of absorbing noise generated within an air flow passage while reducing friction losses caused by flow within the air flow passage.

### SOLUTION TO PROBLEM

The sound absorption panel with riblets according to the present disclosure is used by being attached at a position facing an air flow passage. It comprises a perforated plate provided with riblets and through holes and facing the air flow passage, and cells having internal spaces that communicate with the air flow passage through the through holes. The riblets are provided on the surface of the perforated plate facing the air flow passage, and are not provided on the back surface of the perforated plate or on the inner surfaces of the through holes.

The first distance may be defined as the center-to-center spacing of multiple through holes along the main flow on the surface, and the second distance may be defined as the center-to-center spacing of multiple through holes along the direction perpendicular to the main flow, where the first distance and second distance are determined based on the ratio of the area of the through holes to the surface area.

The first distance may be different from the second distance.

The first distance may be smaller than the second distance.

The first distance may be smaller than 1.16 times the second distance.

The product of the first distance and second distance may be determined based on the ratio.

The product of the first distance and second distance may be determined in inverse proportion to the ratio.

The first distance may be three times or more the radius of the through holes.

Riblets positioned at a predetermined distance or more from the center of through holes along the direction perpendicular to the main flow on the surface are designated as first riblets. Riblets positioned at less than the predetermined distance from the center of through holes are designated as second riblets. Here, the pattern of the second riblets may be different from the pattern of the first riblets.

The height of the second riblets may be smaller than the height of the first riblets.

The width of the second riblets may be smaller than the width of the first riblets.

The height of the second riblets may approach the height of the first riblets as they approach other through holes adjacent to the through holes on the downstream side of the main flow along the main flow.

The width of the second riblets may approach the width of the first riblets as they approach other through holes adjacent to the through holes on the downstream side of the main flow along the main flow.

The predetermined distance may be equal to or greater than the radius of the through holes.

The predetermined distance may be 1.4 times or less the radius of the through holes.

### ADVANTAGEOUS EFFECTS OF INVENTION

According to the present disclosure, it is possible to provide a sound absorption panel with riblets capable of absorbing noise generated within an air flow passage while reducing friction losses caused by flow within the air flow passage.

### BRIEF DESCRIPTION OF DRAWINGS

[Fig. 1] Fig. 1 is an external view of the sound absorption panel with riblets according to the first embodiment of the present disclosure.
[Fig. 2] Fig. 2 is a cross-sectional view of the sound absorption panel with riblets in the vicinity of through holes.
[Fig. 3] Fig. 3 is a cross-sectional view showing an example of riblets.
[Fig. 4] Fig. 4 is an external view of the sound absorption panel with riblets according to the second embodiment of the present disclosure.
[Fig. 5] Fig. 5 is an external view of the sound absorption panel with riblets according to the third embodiment of the present disclosure.
[Fig. 6] Fig. 6 is a diagram showing an example of the relationship between sound pressure and the amount of increase in friction loss.

### DESCRIPTION OF EMBODIMENTS

Hereinafter, several exemplary embodiments will be described with reference to the drawings. In each drawing, common parts are given the same reference numerals, and overlapping descriptions are omitted.

### [Configuration of Sound Absorption Panel with Riblets According to First Embodiment]

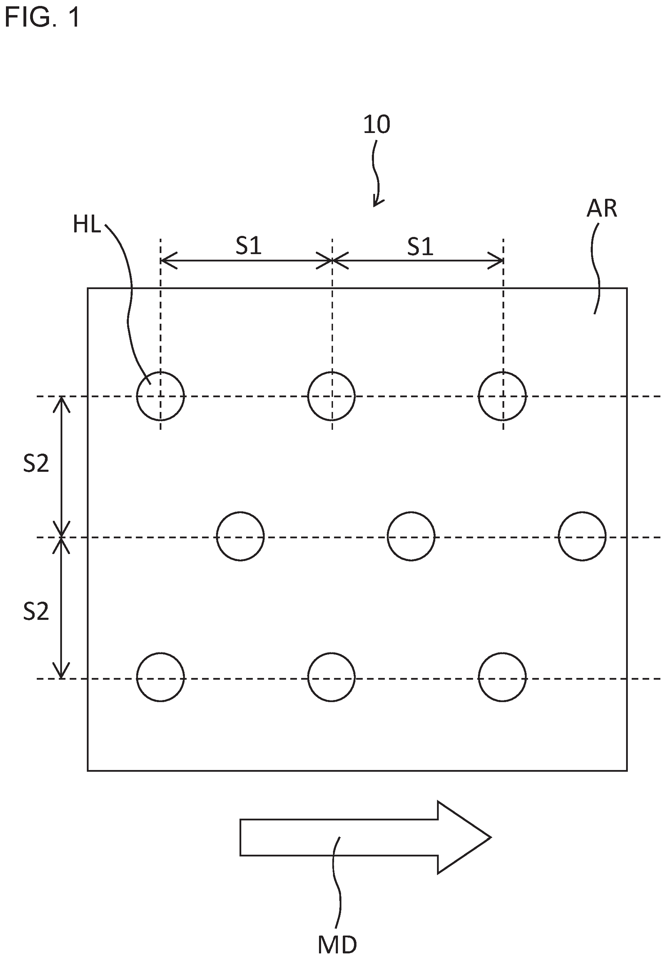

Fig. 1 is an external view of the sound absorption panel with riblets according to the first embodiment of the present disclosure. The sound absorption panel with riblets 10 is attached to face an external space where noise propagates, for example, an air flow passage, in order to absorb noise generated from devices having air flow passages such as jet engines. That is, the sound absorption panel with riblets 10 is used by being attached at a position facing an air flow passage.

Fig. 1 shows the external appearance (partial view) of the sound absorption panel with riblets 10 as viewed from the air flow passage side. As shown in Fig. 1, the sound absorption panel with riblets 10 has multiple through holes HL provided on surface ST. Additionally, riblets RB are provided in region AR of surface ST where through holes HL are not arranged.

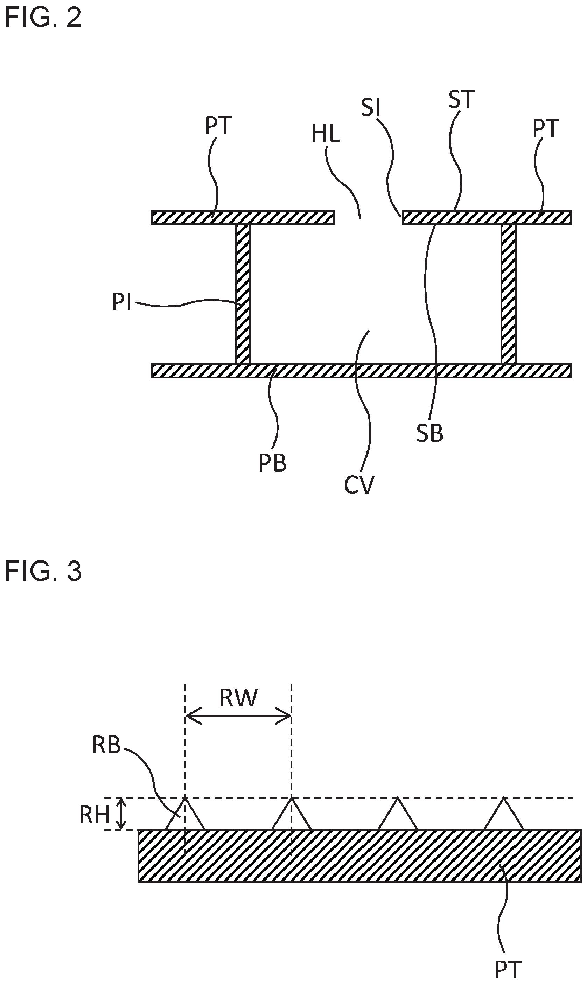

Fig. 2 is a cross-sectional view of the sound absorption panel with riblets in the vicinity of through holes. The sound absorption panel with riblets 10 comprises a perforated plate PT provided with riblets RB and through holes HL and facing the air flow passage, and cells CV having internal spaces that communicate with the air flow passage through the through holes HL. Fig. 2 shows how cells CV are formed by perforated plate PT, bottom wall PB, and partition walls PI, and how the internal space of cells CV communicates with the air flow passage above perforated plate PT through through holes HL.

As shown in Figs. 1 and 2, the sound absorption panel with riblets 10 can function cells CV as Helmholtz resonators by providing numerous through holes HL that connect cells CV with the air flow passage. As a result, the sound absorption panel with riblets 10 absorbs noise from the air flow passage.

The riblets RB are provided on surface ST of the perforated plate PT facing the air flow passage, and are not provided on back surface SB of the perforated plate PT or on inner surfaces SI of the through holes HL. This allows riblets RB to be provided only on surface ST of perforated plate PT, thereby reducing costs when forming riblets RB. Riblets RB are formed by various methods such as transfer sheet molding and laser processing. The method for forming riblets RB on surface ST is not limited to the examples given here.

Fig. 3 is a cross-sectional view showing an example of riblets. Riblets RB are fine longitudinal groove structures (patterns) applied to surface ST of perforated plate PT to reduce turbulent friction resistance of fluid. Various types can be considered for riblets RB formed on the sound absorption panel with riblets 10. Parameters characterizing the pattern of riblets RB include the width RW between ridge peaks of riblets RB and the height RH of riblets RB. The parameters characterizing the pattern of riblets RB are not limited to the examples given here.

By forming riblets RB on surface ST, noise from the air flow passage can be reduced, and furthermore, the area where high-speed flow within the air flow passage directly contacts surface ST can be reduced. As a result, friction losses caused by flow within the air flow passage can be reduced. Surface resistance friction on surface ST can also be reduced.

Next, the arrangement of through holes HL will be described. As shown in Fig. 1, the center-to-center spacing of multiple through holes HL along the main flow direction MD of the air flow passage is defined as first distance S1. Also, the center-to-center spacing of through holes HL along the direction perpendicular to main flow direction MD is defined as second distance S2.

Here, first distance S1 and second distance S2 are determined based on the ratio of the area of through holes HL to surface ST (opening ratio). The ratio of the area of through holes HL to surface ST is set based on various conditions such as sound absorption performance to be imparted to the sound absorption panel with riblets 10.

First distance S1 may be set to a different value from second distance S2. In particular, first distance S1 may be set smaller than second distance S2. Directly downstream of through holes HL in main flow direction MD, the main flow tends to be affected by through holes HL, causing an increase in friction stress. On the other hand, lateral to through holes HL (in the direction perpendicular to main flow direction MD), the increase in friction stress due to the main flow being affected by through holes HL is small.

By setting first distance S1 smaller than second distance S2, the flow range that is less affected by through holes HL can be expanded. Here, the width RW of riblets RB effective for the main flow is larger than the width RW of riblets RB effective for flow downstream of through holes HL. Therefore, costs for forming riblets RB can be reduced.

First distance S1 may be set smaller than 1.16 times second distance S2. For example, when through holes HL are arranged in a triangular lattice pattern, first distance S1 becomes a value that is 2√3/3 times second distance S2 (approximately 1.16 times second distance S2). Compared to the triangular lattice arrangement, setting first distance S1 smaller than 1.16 times second distance S2 can also expand the flow range that is less affected by through holes HL. As a result, costs for forming riblets RB can be reduced.

Additionally, the product of first distance S1 and second distance S2 may be determined based on the ratio of the area of through holes HL to surface ST (opening ratio). In particular, the product of first distance S1 and second distance S2 may be determined in inverse proportion to the ratio of the area of through holes HL to surface ST. In designing the sound absorption panel with riblets 10, after determining the radius R of through holes HL and the opening ratio, first distance S1 and second distance S2 are set to determine the arrangement of through holes HL. By determining the product of first distance S1 and second distance S2 based on the ratio, it is possible to easily expand the flow range that is less affected by through holes HL and reduce costs for forming riblets RB.

Additionally, first distance S1 may be three times or more the radius R of through holes HL. This prevents through holes HL from getting too close to each other and ensures the strength of perforated plate PT.

### [Configuration of Sound Absorption Panel with Riblets According to Second Embodiment]

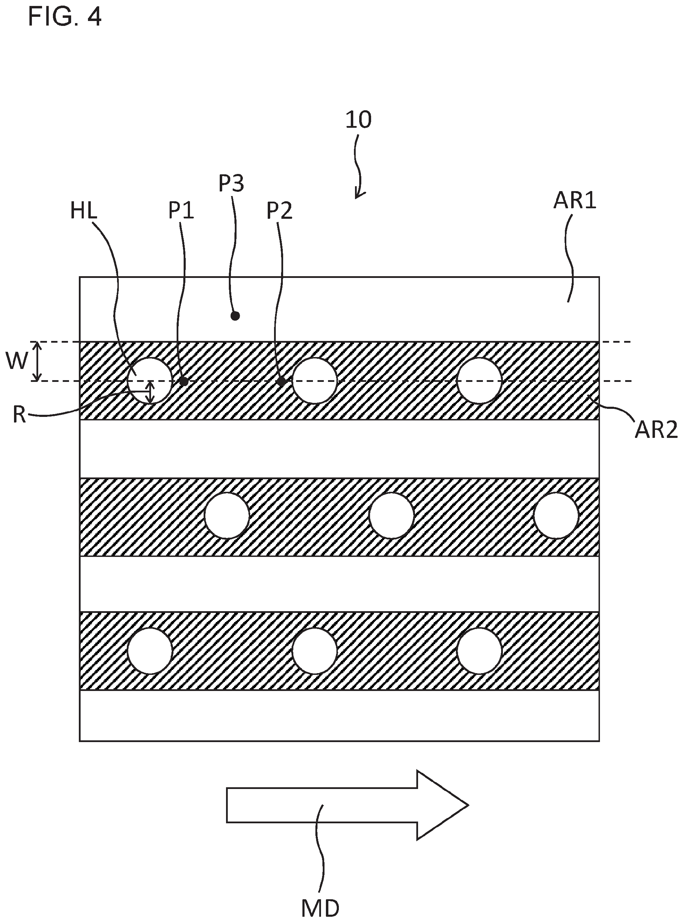

Fig. 4 is an external view of the sound absorption panel with riblets according to the second embodiment of the present disclosure. Fig. 4 shows the external appearance (partial view) of the sound absorption panel with riblets 10 as viewed from the air flow passage side. As shown in Fig. 4, the sound absorption panel with riblets 10 has multiple through holes HL provided on surface ST. Additionally, the region of surface ST where through holes HL are not arranged consists of region AR1 and region AR2.

Here, the region at a predetermined distance or more from the center of through holes HL along the direction perpendicular to main flow direction MD is defined as region AR1. The region at less than the predetermined distance from the center of through holes HL along the direction perpendicular to main flow direction MD is defined as region AR2. For explanation purposes, riblets RB arranged in region AR1 are called first riblets, and riblets RB arranged in region AR2 are called second riblets.

In Fig. 4, the pattern of second riblets differs from the pattern of first riblets. For example, the height RH of second riblets may be smaller than the height RH of first riblets. The width RW of second riblets may be smaller than the width RW of first riblets.

Region AR1 can be said to be a flow range that is less affected by through holes HL. Therefore, it is desirable that the pattern of first riblets arranged in region AR1 be effective for the main flow. On the other hand, it is desirable that the pattern of second riblets arranged in region AR2 be effective for flow after being affected by through holes HL. Therefore, the height RH of second riblets is made smaller than the height RH of first riblets, and the width RW of second riblets is made smaller than the width RW of first riblets. This can reduce costs for forming riblets RB.

The pattern of second riblets arranged in region AR2 may be set based on the positional relationship with through holes HL. For example, the height RH of second riblets may be set to approach the height RH of first riblets as they approach other through holes HL adjacent to through holes HL on the downstream side of the main flow along main flow direction MD. Similarly, the width RW of second riblets may be set to approach the width RW of first riblets as they approach other through holes HL adjacent to through holes HL on the downstream side of the main flow along main flow direction MD.

For example, let's compare the pattern of second riblets at point P1 and the pattern of second riblets at point P2 with the pattern of first riblets at point P3. Points P1 and P2 are arranged sequentially in the flow direction of the main flow along main flow direction MD. That is, point P2 is located downstream of point P1.

At point P1, it is a point close to the upstream through hole HL and greatly affected by flow influenced by the upstream through hole HL. On the other hand, at point P2, it is distant from the upstream through hole HL and can be said to be a point where the flow is less affected by the upstream through hole HL. Therefore, the flow at point P2 is closer to the flow at point P3 compared to the flow at point P1. In other words, as one moves away from the upstream through hole HL and approaches the downstream through hole HL, the influence of the upstream through hole HL on the flow becomes smaller.

Therefore, the pattern of second riblets may be set to approach the pattern of first riblets as they approach other through holes HL adjacent to through holes HL on the downstream side of the main flow along main flow direction MD, thereby increasing riblets effective for the main flow.

Additionally, the predetermined distance used when defining region AR1 and region AR2 may be equal to or greater than radius R of through holes HL. Also, the predetermined distance may be 1.4 times or less radius R. This limits the region where riblets effective for flow affected by through holes HL are arranged and increases the region where riblets effective for the main flow are arranged. As a result, friction losses caused by flow within the air flow passage can be reduced more effectively.

### [Configuration of Sound Absorption Panel with Riblets According to Third Embodiment]

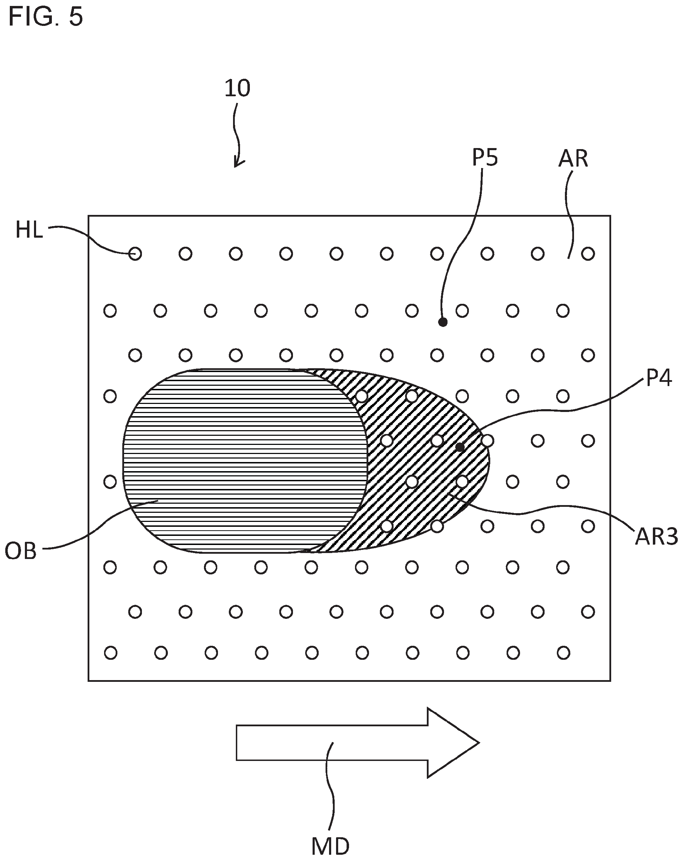

Fig. 5 is an external view of the sound absorption panel with riblets according to the third embodiment of the present disclosure. Fig. 5 shows the external appearance (partial view) of the sound absorption panel with riblets 10 as viewed from the air flow passage side. As shown in Fig. 5, the sound absorption panel with riblets 10 has multiple through holes HL provided on surface ST. Additionally, region AR3 exists downstream of obstacle OB along main flow direction MD on surface ST.

As a result of the main flow being obstructed by obstacle OB, the velocity of the main flow in region AR3 is below a predetermined velocity, and the velocity of the main flow on surface ST other than region AR3 is at or above the predetermined velocity. Here, the width of riblets (high-speed flow region riblets) arranged on surface ST other than region AR3 may be smaller than the width of riblets (low-speed flow region riblets) arranged in region AR3.

For example, the width of riblets at point P5 (high-speed flow region riblets) is smaller than the width of riblets at point P4 (low-speed flow region riblets). This allows both patterns effective for high-speed main flow and patterns effective for low-speed main flow within the air flow passage to be provided on surface ST of perforated plate PT. As a result, friction losses caused by flow within the air flow passage can be reduced more effectively.

### [Configuration of Sound Absorption Panel with Riblets According to Fourth Embodiment]

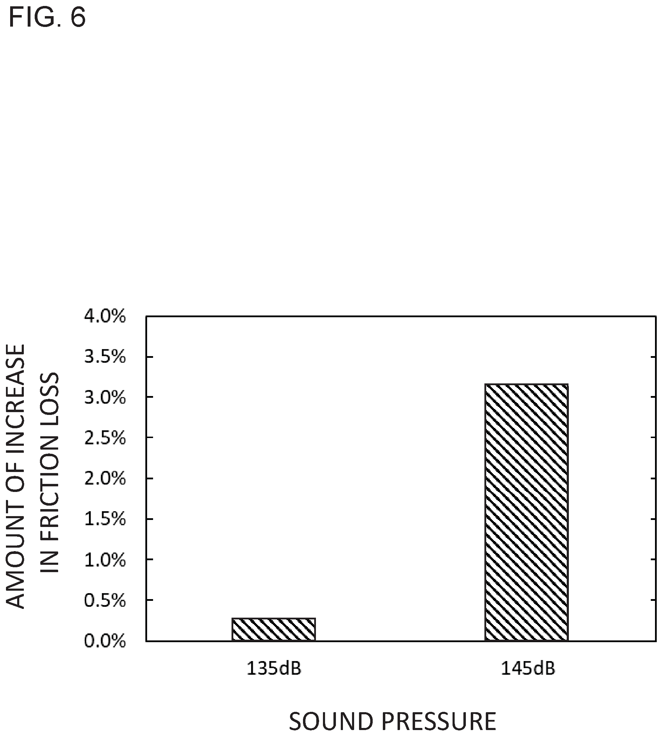

Fig. 6 is a diagram showing an example of the relationship between sound pressure and the amount of increase in friction loss. To investigate the sound absorption effect of the sound absorption panel with riblets, tests were conducted to examine changes in friction loss with the air flow passage by varying sound pressure.

As a result of the tests, compared to friction loss when no sound pressure was applied, friction loss increased by 0.3% when the applied sound pressure was 135 dB. Also, compared to friction loss when no sound pressure was applied, friction loss increased by 3.1% when the applied sound pressure was 145 dB. That is, the amount of increase in friction loss when the applied sound pressure was 145 dB was approximately 10 times that when the applied sound pressure was 135 dB. This is presumed to be due to increased losses from jets emerging from through holes as the applied sound pressure increases.

Riblets designed to achieve loss reduction effects in the boundary layer of the main flow cannot, as they are, achieve sufficient loss reduction effects due to flow jetting from through holes. Therefore, in regions where sound pressure becomes large, it is necessary to suppress flow jetting from through holes.

In this embodiment, through holes positioned where sound pressure on the surface is at or above a predetermined sound pressure are designated as high sound pressure region through holes. Through holes positioned where sound pressure on the surface is below the predetermined sound pressure are designated as low sound pressure region through holes. The diameter of high sound pressure region through holes is made smaller than the diameter of low sound pressure region through holes. This allows both through holes effective for large sound pressures and through holes effective for small sound pressures to be provided on surface ST of perforated plate PT. As a result, friction losses caused by flow within the air flow passage can be reduced more effectively.

### [Effects of Embodiments]

As described in detail above, the sound absorption panel with riblets according to the present disclosure is used by being attached at a position facing an air flow passage. It comprises a perforated plate provided with riblets and through holes and facing the air flow passage, and cells having internal spaces that communicate with the air flow passage through the through holes. The riblets are provided on the surface of the perforated plate facing the air flow passage, and are not provided on the back surface of the perforated plate or on the inner surfaces of the through holes.

This enables absorption of noise generated within the air flow passage while reducing friction losses caused by flow within the air flow passage. It also enables both noise reduction and energy efficiency improvement for aircraft and other vehicles equipped with devices having air flow passages.

The first distance may be defined as the center-to-center spacing of multiple through holes along the main flow on the surface, and the second distance may be defined as the center-to-center spacing of multiple through holes along the direction perpendicular to the main flow, where the first distance and second distance are determined based on the ratio of the area of the through holes to the surface area. This enables easy expansion of the flow range that is less affected by through holes in designing the sound absorption panel with riblets. As a result, costs for forming riblets can be reduced.

The first distance may be different from the second distance. Also, the first distance may be smaller than the second distance. These enable easy expansion of the flow range that is less affected by through holes and reduction of costs for forming riblets.

The first distance may be smaller than 1.16 times the second distance. This enables design changes to proceed based on the case where through holes HL are arranged in a triangular lattice pattern. It easily enables expansion of the flow range that is less affected by through holes and reduction of costs for forming riblets.

The product of the first distance and second distance may be determined based on the ratio. Also, the product of the first distance and second distance may be determined in inverse proportion to the ratio. In designing the sound absorption panel with riblets, after determining the radius of through holes and the opening ratio, the first distance and second distance are set to determine the arrangement of through holes. By determining the product of the first distance and second distance based on the ratio, it is possible to easily expand the flow range that is less affected by through holes and reduce costs for forming riblets.

The first distance may be three times or more the radius of through holes. This prevents through holes from getting too close to each other and ensures the strength of the perforated plate.

Riblets positioned at a predetermined distance or more from the center of through holes along the direction perpendicular to the main flow on the surface are designated as first riblets. Riblets positioned at less than the predetermined distance from the center of through holes are designated as second riblets. The pattern of second riblets may be different from the pattern of first riblets. This enables both patterns effective for the main flow within the air flow passage and patterns effective for flow after being affected by through holes to be provided on surface ST of perforated plate PT. As a result, friction losses caused by flow within the air flow passage can be reduced more effectively.

The height of second riblets may be smaller than the height of first riblets. Also, the width of second riblets may be smaller than the width of first riblets. These enable riblets to be arranged with patterns effective for flow after being affected by through holes. As a result, friction losses caused by flow within the air flow passage can be reduced.

The height of second riblets may approach the height of first riblets as they approach other through holes adjacent to the through holes on the downstream side of the main flow along the main flow. Also, the width of second riblets may approach the width of first riblets as they approach other through holes adjacent to the through holes on the downstream side of the main flow along the main flow. These enable an increase in riblets arranged with patterns effective for the main flow within the air flow passage. As a result, the effect of reducing friction losses caused by flow within the air flow passage can be enhanced. Furthermore, costs for forming riblets can be reduced.

The predetermined distance may be equal to or greater than the radius of through holes. Also, the predetermined distance may be 1.4 times or less the radius of through holes. These limit the region where riblets effective for flow affected by through holes are arranged and increase the region where riblets effective for the main flow are arranged. As a result, friction losses caused by flow within the air flow passage can be reduced more effectively. Furthermore, costs for forming riblets can be reduced.

Riblets positioned where the velocity of the main flow on the surface is at or above a predetermined velocity are designated as high flow velocity region riblets. Riblets positioned where the velocity of the main flow on the surface is below the predetermined velocity are designated as low flow velocity region riblets. The width of high flow velocity region riblets may be smaller than the width of low flow velocity region riblets. This enables both patterns effective for high-speed main flow and patterns effective for low-speed main flow within the air flow passage to be provided on surface ST of perforated plate PT. As a result, friction losses caused by flow within the air flow passage can be reduced more effectively.

Through holes positioned where sound pressure on the surface is at or above a predetermined sound pressure are designated as high sound pressure region through holes. Through holes positioned where sound pressure on the surface is below the predetermined sound pressure are designated as low sound pressure region through holes. The diameter of high sound pressure region through holes may be smaller than the diameter of low sound pressure region through holes. This enables both through holes effective for large sound pressures and through holes effective for small sound pressures to be provided on surface ST of perforated plate PT. As a result, friction losses caused by flow within the air flow passage can be reduced more effectively.

According to the present disclosure, both noise reduction and energy efficiency improvement can be achieved for aircraft and other vehicles equipped with devices having air flow passages. Therefore, it can contribute to, for example, Goal 13 of the Sustainable Development Goals (SDGs) led by the United Nations: "Take urgent action to combat climate change and its impacts."

While several embodiments have been described, modifications or variations of the embodiments are possible based on the above disclosure. All components of the above embodiments and all features described in the claims may be individually extracted and combined as long as they do not contradict each other.

This application claims priority based on Japanese Patent Application No. 2023-122640 filed on July 27, 2023, and the entire content of this application is incorporated herein by reference.

### REFERENCE SIGNS LIST

- 10: sound absorption panel with riblets
- AR1, AR2, AR3: regions
- CV: cell
- HL: through hole
- MD: main flow direction
- PT: perforated plate
- R: radius
- RB: riblet
- RH: height
- RW: width
- S1: first distance
- S2: second distance
- ST: surface

## Claims

1. A sound absorption panel with riblets used by being attached at a position facing an air flow passage, comprising:
a perforated plate provided with riblets and through holes and facing the air flow passage; and
cells having internal spaces that communicate with the air flow passage through the through holes,
wherein the riblets are provided on a surface of the perforated plate facing the air flow passage, and are not provided on a back surface of the perforated plate or on inner surfaces of the through holes.

2. The sound absorption panel with riblets according to claim 1, wherein:
a center-to-center spacing of multiple through holes along a main flow on the surface is defined as a first distance,
a center-to-center spacing of multiple through holes along a direction perpendicular to the main flow is defined as a second distance, and
the first distance and the second distance are determined based on a ratio of an area of the through holes to the surface.

3. The sound absorption panel with riblets according to claim 2, wherein the first distance is different from the second distance.

4. The sound absorption panel with riblets according to claim 3, wherein the first distance is smaller than the second distance.

5. The sound absorption panel with riblets according to claim 2, wherein the first distance is smaller than 1.16 times the second distance.

6. The sound absorption panel with riblets according to claim 2, wherein a product of the first distance and the second distance is determined based on the ratio.

7. The sound absorption panel with riblets according to claim 6, wherein the product of the first distance and the second distance is determined in inverse proportion to the ratio.

8. The sound absorption panel with riblets according to claim 2, wherein the first distance is three times or more a radius of the through holes.

9. The sound absorption panel with riblets according to any one of claims 1 to 8, wherein:
along a direction perpendicular to a main flow on the surface,
riblets positioned at a predetermined distance or more from a center of the through holes are designated as first riblets,
riblets positioned at less than the predetermined distance from the center of the through holes are designated as second riblets, and
a pattern of the second riblets is different from a pattern of the first riblets.

10. The sound absorption panel with riblets according to claim 9, wherein a height of the second riblets is smaller than a height of the first riblets.

11. The sound absorption panel with riblets according to claim 9, wherein a width of the second riblets is smaller than a width of the first riblets.

12. The sound absorption panel with riblets according to claim 9, wherein the height of the second riblets approaches the height of the first riblets as they approach other through holes adjacent to the through holes on a downstream side of the main flow along the main flow.

13. The sound absorption panel with riblets according to claim 9, wherein the width of the second riblets approaches the width of the first riblets as they approach other through holes adjacent to the through holes on a downstream side of the main flow along the main flow.

14. The sound absorption panel with riblets according to claim 9, wherein the predetermined distance is equal to or greater than a radius of the through holes.

15. The sound absorption panel with riblets according to claim 9, wherein the predetermined distance is 1.4 times or less a radius of the through holes.

16. The sound absorption panel with riblets according to any one of claims 1 to 8, wherein:
based on a velocity of a main flow on the surface,
riblets positioned where the velocity is at or above a predetermined velocity are designated as high flow velocity region riblets,
riblets positioned where the velocity is below the predetermined velocity are designated as low flow velocity region riblets, and
a width of the high flow velocity region riblets is smaller than a width of the low flow velocity region riblets.

17. The sound absorption panel with riblets according to any one of claims 1 to 8, wherein:
based on sound pressure on the surface,
through holes positioned where the sound pressure is at or above a predetermined sound pressure are designated as high sound pressure region through holes,
through holes positioned where the sound pressure is below the predetermined sound pressure are designated as low sound pressure region through holes, and
a diameter of the high sound pressure region through holes is smaller than a diameter of the low sound pressure region through holes.

## Amended claims

### Amended claims under Art. 19.1 PCT

1. **(Amended)** A sound absorption panel with riblets used by being attached at a position facing an air flow passage, comprising:
a perforated plate provided with riblets and through holes and facing the air flow passage; and
cells having internal spaces that communicate with the air flow passage through the through holes,
wherein the riblets are provided on a surface of the perforated plate facing the air flow passage, and are not provided on a back surface of the perforated plate or on inner surfaces of the through holes,
wherein, with respect to a predetermined region occupying a part of the surface,
the riblets arranged outside the predetermined region are designated as first riblets,
the riblets arranged inside the predetermined region are designated as second riblets, and
a pattern of the second riblets is different from a pattern of the first riblets.

2. The sound absorption panel with riblets according to claim 1, wherein:
a center-to-center spacing of the multiple through holes along a main flow on the surface is defined as a first distance,
a center-to-center spacing of the multiple through holes along a direction perpendicular to the main flow is defined as a second distance, and
the first distance and the second distance are determined based on a ratio of an area of the through holes to the surface.

3. The sound absorption panel with riblets according to claim 2, wherein the first distance is different from the second distance.

4. The sound absorption panel with riblets according to claim 3, wherein the first distance is smaller than the second distance.

5. The sound absorption panel with riblets according to claim 2, wherein the first distance is smaller than 1.16 times the second distance.

6. The sound absorption panel with riblets according to claim 2, wherein a product of the first distance and the second distance is determined based on the ratio.

7. The sound absorption panel with riblets according to claim 6, wherein the product of the first distance and the second distance is determined in inverse proportion to the ratio.

8. The sound absorption panel with riblets according to claim 2, wherein the first distance is three times or more a radius of the through holes.

9. **(Amended)** The sound absorption panel with riblets according to any one of claims 1 to 8, wherein the predetermined region is a region within less than a predetermined distance from a reference line set on the surface.

10. **(Amended)** The sound absorption panel with riblets according to any one of claims 1 to 8, wherein a height of the second riblets is smaller than a height of the first riblets.

11. **(Amended)** The sound absorption panel with riblets according to any one of claims 1 to 8, wherein a width of the second riblets is smaller than a width of the first riblets.

12. **(Amended)** The sound absorption panel with riblets according to any one of claims 1 to 8, wherein the height of the second riblets approaches the height of the first riblets as they approach other through holes adjacent to the through holes on a downstream side of the main flow along the main flow on the surface.

13. **(Amended)** The sound absorption panel with riblets according to any one of claims 1 to 8, wherein the width of the second riblets approaches the width of the first riblets as they approach other through holes adjacent to the through holes on a downstream side of the main flow along the main flow on the surface.

14. The sound absorption panel with riblets according to claim 9, wherein the predetermined distance is equal to or greater than a radius of the through holes.

15. The sound absorption panel with riblets according to claim 9, wherein the predetermined distance is 1.4 times or less a radius of the through holes.

16. The sound absorption panel with riblets according to any one of claims 1 to 8, wherein:
based on a velocity of a main flow on the surface,
the riblets positioned where the velocity is at or above a predetermined velocity are designated as high flow velocity region riblets,
the riblets positioned where the velocity is below the predetermined velocity are designated as low flow velocity region riblets, and
a width of the high flow velocity region riblets is smaller than a width of the low flow velocity region riblets.

17. The sound absorption panel with riblets according to any one of claims 1 to 8, wherein:
based on sound pressure on the surface,
the through holes positioned where the sound pressure is at or above a predetermined sound pressure are designated as high sound pressure region through holes,
the through holes positioned where the sound pressure is below the predetermined sound pressure are designated as low sound pressure region through holes, and
a diameter of the high sound pressure region through holes is smaller than a diameter of the low sound pressure region through holes.

18. **(Added)** The sound absorption panel with riblets according to any one of claims 1 to 8, wherein the predetermined region is determined based on a position of an obstacle on the surface.

19. **(Added)** The sound absorption panel with riblets according to claim 18, wherein the predetermined region is located downstream of the obstacle along a main flow on the surface.

Statement under Art. 19.1 PCT
The Applicant, who received the International Search Report relating to the above-identified International Application transmitted on 01. 10. 2024, hereby files amendment under Article 19(1) as in the attached sheets.

We hereby would like to amend claims 1, 9-13, and also add claims 18 and 19. The amended claim 1 is based on claims 1 and 9, figures 4 and 5 as filed. The amended claim 9 is based on claim 9 and figure 4 as filed. The amended claims 10-13 are based on claims 10-13 as filed, respectively. The added claims 18 and 19 are based on paragraphs [0047] - [0048] and figure 5 as filed.
